# EUROPÄISCHE PATENTSCHRIFT

(11) **EP 1 281 470 B1**
(45) Veröffentlichungstag und Bekanntmachung des Hinweises auf die Patenterteilung: **02.05.2007**
(21) Anmeldenummer: 02016855.5
(22) Anmeldetag: 30.07.2002
(51) Int. Cl.: B23P 19/00, B23P 21/00, B62D 65/00

(54) **Verfahren zur Montage einer Tür an einem Kraftfahrzeug**
Method for mounting a door on a vehicle
Procédé de montage d'une portière sur une automobile

(30) Priorität: 31.07.2001 AT 6032001 U
(43) Veröffentlichungstag der Anmeldung: 05.02.2003
(73) Patentinhaber: Uniport S.A.S., 57913 Hambach Cedex (FR)
(72) Erfinder: Saling Jean, 67260 Harskirchen (FR)
(74) Vertreter: Harringer, Thomas

(56) Entgegenhaltungen:
- DE-A- 4 214 863
- DE-C- 3 443 312
- US-A- 6 122 819
- PATENT ABSTRACTS OF JAPAN vol. 014, no. 506 (M-1044), 6. November 1990 (1990-11-06) -& JP 02 208180 A (MAZDA MOTOR; DAIFUKU KK), 17. August 1990 (1990-08-17)

## Beschreibung

Die Erfindung handelt von einem Verfahren zur Montage einer Tür an einem Kraftfahrzeug. Die Montage der Türen ist eine besonders schwierige und arbeitsaufwendige Phase des Zusammenbaues eines Kraftfahrzeuges, weil es sich dabei um die Vereinigung von zwei Baugruppen mit jeweils stark streuenden Toleranzen handelt, erschwert noch durch funktionelle Anforderungen (Öffnen, Absperren, etc.) und ästhetische (gleiche Spaltmaße und Fluchten mit der Kontur des Fahrzeuges).

Das bisher geübte Verfahren bei Fahrzeugen der gehobenen Mittelklasse und darüber besteht in folgenden Schritten:
■ Der Türrohbau mit zweiteiligem Scharnier (das ist ein Scharnier, dessen Schenkel voneinander trennbar sind) wird in den Türausschnitt des Fahrzeugkörpers eingepasst. Dann wird der aufbauseitige Schenkel des Scharniers in der richtigen Position mit dem Fahrzeugkörper verbunden (verschraubt oder verschweisst).
■ Weil zur Befestigung der Scharniere der Vordertür die A-Säule von der der Tür abgewandten Seite zugänglich sein muss, kann erst dann der Kotflügel montiert werden.
■ In der Folge wird die Rohbautür wieder (durch Trennen der beiden Schenkel des Scharniers) vom Fahrzeugkörper getrennt, dann werden beide auf eigenen Strassen lackiert und weiter montiert, um dann nach Montage bzw. Einstellung des Schließbügels wieder vereint zu werden. Dabei wird dann erst die Feineinstellung dessen vorgenommen, was iterative Arbeitsschritte (Tür schließen, Flucht und Gängigkeit prüfen, verstellen, wieder schließen, etc.) erfordert und zeitraubend ist.

Bei einfacheren Fahrzeugen wird neuerdings ein vereinfachtes Verfahren angewandt:
■ Tür mit einteiligem Scharnier (das ist ein Scharnier, dessen Schenkel nicht voneinander trennbar sind) in den Türausschnitt des Fahrzeugkörpers einpassen,
■ aufbauseitigen Schenkel des Scharniers in der richtigen Position mit dem Fahrzeugkörper verschrauben, wozu die Schrauben von aussen zugänglich sein müssen. Das, weil das Einpassen der Tür naturgemäß nur in deren geschlossenem Zustand erfolgen kann. Dazu wird der Schließbügel mittels einer Lehre positioniert.
■ Anpassen und Befestigen (verschweissen oder verschrauben) der die Schrauben verdeckenden Teile des Fahrzeugkörpers, das sind meist die Kotflügel.

Dieses Verfahren ist ebenfalls nicht anwendbar, wenn der Kotflügel mit dem Fahrzeugkörper einstückig ist. Es ist zwar in Einzelfällen möglich, Öffnungen vorzusehen, durch die die Scharnierschrauben von aussen zugänglich sind, jedoch beeinträchtigen diese die Festigkeit der A-Säule, erhöhen die Kosten und sind unschön, auch wenn sie nachher mit einer Kappe verschlossen sind.

Auch bei dem zuletzt beschriebenen vereinfachten Verfahren ist der Zeitaufwand für das Einpassen noch erheblich.

Aus der US Patentschrift 6,122,819 ist eine Vorrichtung zur Positionierung schließrelevanter Teile einer Tür an einem Kraftfahrzeugkörper bekannt, welche mittels Referenzdornen und Klemmmechanismen bezüglich des Kraftfahrzeugkörpers positioniert wird und auf der die Scharniere mittels ihres türseitigen Scharnierteiles gehalten werden. Der fahrzeugseitige Scharnierteil wird in der Folge am Fahrzeugkörper fixiert. Über die weitere Vorgangsweise ist der Schrift nichts zu entnehmen. Die Positionierung des türseitigen Scharnierteiles an der Tür erfolgt somit nach dem üblichen arbeitsintensiven Verfahren.

Es ist somit Aufgabe der Erfindung, mit einem Minimum an Arbeitsschritten ein genaues Montieren einer fertig angelieferten Tür ohne Einpassen, bei voller Berücksichtigung der oben angesprochenen Probleme, zu ermöglichen. Erfindungsgemäß besteht das Verfahren in den im Kennzeichnungsteil des 1. Anspruches unter a) bis c) angegeben Arbeitsgängen.

Insgesamt wird so unter voller Ausnutzung der Möglichkeiten trennbarer Scharnierschenkel der eine Schenkel mittels der Lehre positionsgenau am Fahrzeugkörper, und der andere Schenkel abseits der Fertigung des Fahrzeugkörpers positionsgenau an der Tür befestigt. Dazu wird an den bereits am Fahrzeugkörper befestigten Teilen (Scharnierschenkel und Schließbügel) Maß genommen, um die erforderliche Genauigkeit zu erreichen. Die Lehre stellt die Position der fahrzeugfesten Teile ja nur in zwei Richtungen (hier der x-Richtung und der z-Richtung) ein, in der dritten Richtung (der y-Richtung) müssen diese Teile ja an den Flächen des Fahrzeugkörpers anliegen. Dadurch, dass an den bereits am Fahrzeugkörper befestigten Teilen Maß genommen wird, ist die ansonsten unerträglich lange Toleranzkette kurzgeschlossen.

Zur Erläuterung wird bemerkt, dass die x-Richtung die Fahrzeuglängsrichtung, die y-Richtung die Fahrzeugquerrichtung und die z-Richtung die Höhenrichtung eines Fahrzeuges darstellt. Die angegebenen Richtungen treffen für seitlich angeordnete Türen eines Fahrzeuges zu. Im Falle einer Hecktür sind die Begriffe x-Richtung und y-Richtung zu vertauschen.

Die fahrzeugfesten Scharnierschenkel alleine (also ohne die türfesten Schenkel) sind für die genaue Befestigung (durch Schrauben oder Schweissen) von der Türseite her gut zugänglich, sodass das erfindungsgemäße Verfahren auch bei Fahrzeugen mit einstückigen Kotflügeln anwendbar ist. Die Montage der fertigen Tür am Fahrzeugkörper kann dann praktisch ohne Einstellarbeiten vorgenommen werden, was eine erhebliche Zeit- und Kostenersparnis bringt; nicht nur bei diesem Arbeitsschritt sondern bereits beim Zusammenbau der Tür selbst abseits der Fertigung des Fahrzeugkörpers. Damit ist es möglich, Türen als fertige Baugruppe anzuliefern und schnell in den fertigen Fahrzeugkörper einzubauen.

Um bereits die fahrzeugfesten Teile genau zu positionieren, wird die Lehre an einem ersten Referenzpunkt (A) des Fahrzeugkörpers in einer ersten und einer zweiten Richtung und an einem zweiten Referenzpunkt (B) des Fahrzeugkörpers in der ersten oder zweiten Richtung festgelegt, und an drei Berührungspunkten des Fahrzeugkörpers in der dritten Richtung angelegt (Anspruch 2). Damit ist die Position der Lehre in allen Richtungen voll bestimmt. Vorzugsweise ist die erste Richtung die x-Richtung, die zweite Richtung die z-Richtung und die dritte Richtung die y-Richtung (Anspruch 3). Dazu ist es vorteilhaft, die Referenzpunkte bereits bei der Herstellung der Rohteile des Fahrzeugkörpers als eingestanzte Löcher auszubilden, und zwar den Referenzpunkt (A) in der A-Säule und den Referenzpunkt (B) in der B-Säule des Fahrzeugkörpers (Anspruch 4).

In Weiterbildung der Erfindung sind die Bezugslager für die Positionierung der türseitigen Scharnierschenkel und des Schlosses beziehungsweise Schlossbleches in der Tür verstellbar, wobei die Bezugslager für die türseitigen Scharnierschenkel entsprechend der am Fahrzeugkörper gemessenen Lage der Scharnierachsen der bereits befestigten fahrzeugseitigen Scharnierschenkel und das Bezugslager für das Schlossblech beziehungsweise Schloss entsprechend der am Fahrzeugkörper gemessenen Lage des bereits befestigten Schließbügels eingestellt werden (Anspruch 5). Dabei wird an einen älteren Vorschlag der Anmelderin angeknüpft, der Gegenstand der Patentanmeldung PCT/IB01/01405 ist.

In einer perfektionierten Verfahrensführung werden die Lage der Scharnierachsen der fahrzeugseitigen Scharnierschenkel und des Schließbügels jeweils an dem Fahrzeug gemessen, für das die jeweilige Tür bestimmt ist, und die Bezugslager werden entsprechend verstellt (Anspruch 6). Eine Vereinfachung des Verfahrens wird erreicht, wenn die Lage der Scharnierachsen der fahrzeugseitigen Scharnierschenkel und des Schließbügels jeweils nur in y-Richtung gemessen werden (Anspruch 7). So braucht nur in einer Richtung gemessen zu werden, in den beiden anderen Richtungen ist die Position ja durch die Lehre bestimmt.

Bei der Anwendung des erfindungsgemäßen Verfahrens auf viertürige Kraftfahrzeuge, bei denen zusätzlich zu der Fahrer- und Beifahrertür noch Türen zu den Rücksitzen vorhanden sind, sind in dessen Weiterbildung gemäß Anspruch 8 noch zusätzliche Vorteile erreichbar. Es besteht in den zusätzlichen Schritten a), b) und c).

Gemäß a) wird wieder mittels einer Lehre (die eine weitere Lehre oder einteilig mit der für die vorderen Türen verwendeten Lehre sein kann) an dem bereits für diese vorhandenen Referenzpunkt (B) des Fahrzeugkörpers und an einem dritten Referenzpunkt (C) festgelegt, und an drei Berührungspunkten des Fahrzeugkörpers angelegt. Damit ist auch Einhaltung des Spaltmaßes zwischen den hintereinander angeordneten Türen sichergestellt.

Gemäß b) wird, abweichend von der vorderen Tür, beim Zusammenbau der hinteren Tür der komplette Scharnier (der somit nicht teilbar sein muss) mittels einer Vorrichtung mit Bezugslagern montiert, wobei die hinteren Scharniere und das Schlossblech beziehungsweise Schloss entsprechend am Fahrzeugkörper genommener Maße positioniert werden. Diese Vereinfachung ist möglich, weil die Scharniere der hinteren Türen an der B-Säule angeschlagen sind, die bei geöffneter Vordertür zugänglich ist, und so mitsamt dieser festgeschraubt werden können.

Gemäß c) wird die zusammengebaute hintere Tür mit komplettem Scharnier im Fahrzeugkörper zuerst montiert, und erst nachher die vordere Tür. Auch für die hintere Tür sind die am Fahrzeugkörper genommenen Maße die Position der Scharnier-Auflageflächen und die Position des Schließbügels in y-Richtung und in z-Richtung (Anspruch 9).

Im folgenden wird die Erfindung anhand von Abbildungen beschrieben und erläutert. Es stellen dar:
- Fig. 1:: Eine Seitenansicht eines Fahrzeugkörpers zu Beginn des erfindungsgemäßen Verfahrens,
- Fig. 2:: dieselbe, nach einem ersten Verfahrensschritt,
- Fig. 3:: dieselbe, nach einem zweiten Verfahrensschritt,
- Fig. 4:: eine Frontansicht desselben Fahrzeuges während eines dritten Verfahrensschrittes,
- Fig. 5:: wie Fig. 3, nach einem vierten Verfahrensschritt,
- Fig. 6:: dieselbe, nach einem fünften Verfahrensschritt,
- Fig. 7:: die erfindungsgemäße Hilfsvorrichtung in y-Richtung gesehen.
- Fig. 8:: Schnitt nach AB in Fig. 7.

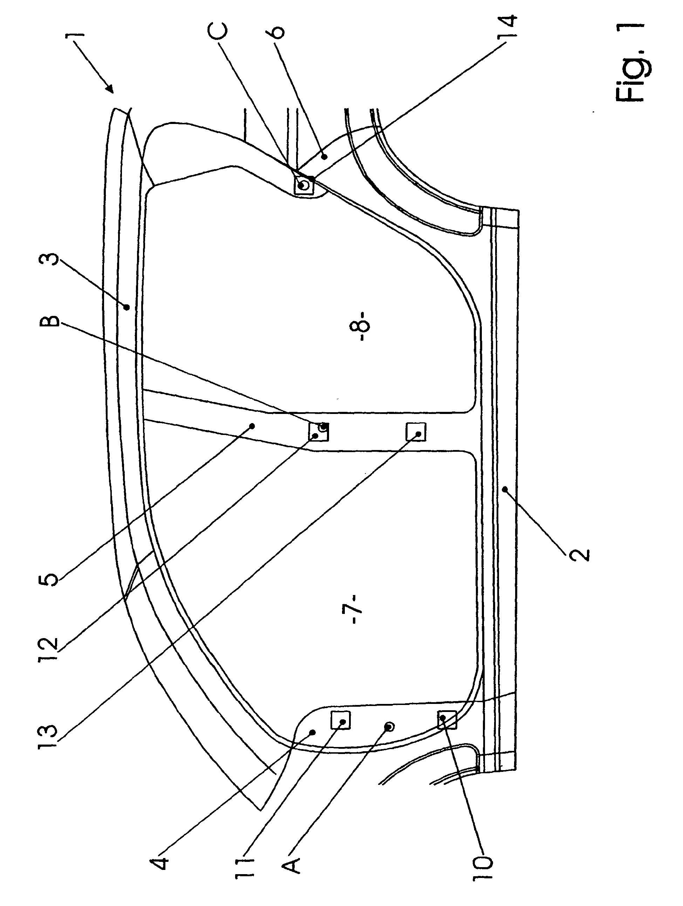

In **Fig. 1** ist der Fahrzeugkörper mit 1 bezeichnet. Zu sehen ist ein Schweller 2, ein Dachholm 3, eine A-Säule 4, eine B-Säule 5 und eine C-Säule 6. Diese Teile begrenzen eine vordere Türöffnung 7 und eine hintere Türöffnung 8. In den drei Säulen 4,5,6 sind als Referenzpunkte A,B,C kleine Löcher eingestanzt. Weiters sind an geeigneten Stellen des Fahrzeugkörpers Berührungspunkte 10-14 definiert, die eigentlich keine Punkte, sondern wegen ihrer Lage besonders geeignete kleine Flächen sind.

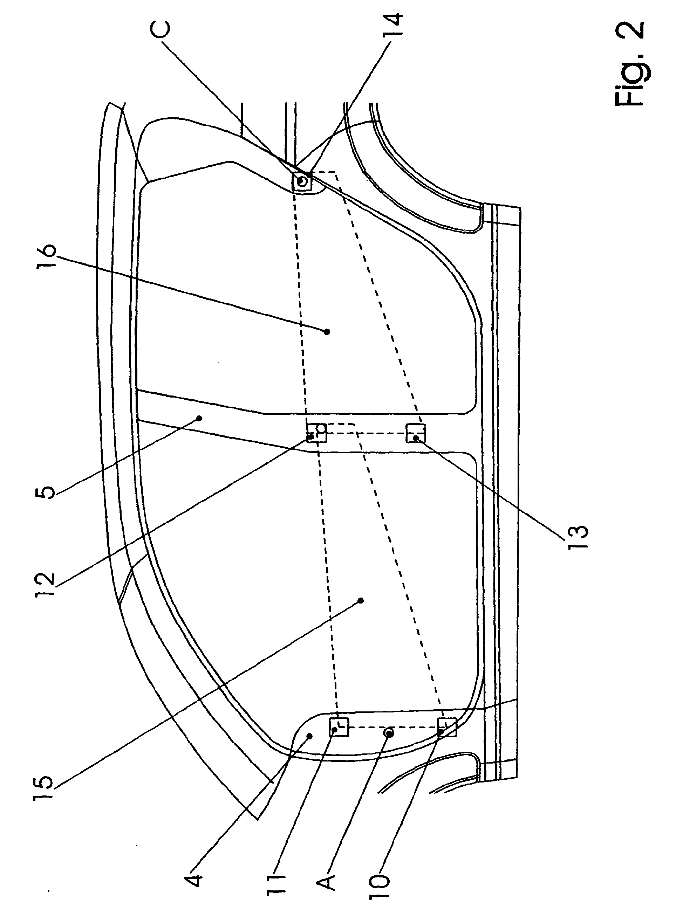

**Fig. 2** zeigt den ersten Schritt des erfindungsgemäßen Verfahrens. Eine Hilfsvorrichtung 15, eine Lehre, wird an den Referenzpunkten A,B positioniert, und zwar am Referenzpunkt A in x-Richtung und z-Richtung und im Referenzpunkt B nur in z-Richtung. Die Berührungspunkte 10,11,12 bestimmen die Lage der Hilfsvorrichtung 15 in y-Richtung. Eine weitere Hilfsvorrichtung 16 wird in ähnlicher Weise für die hintere Tür angelegt. Mittels dieser Hilfsvorrichtungen werden fahrzeugseitige schließrelevante Teile genau positioniert und befestigt.

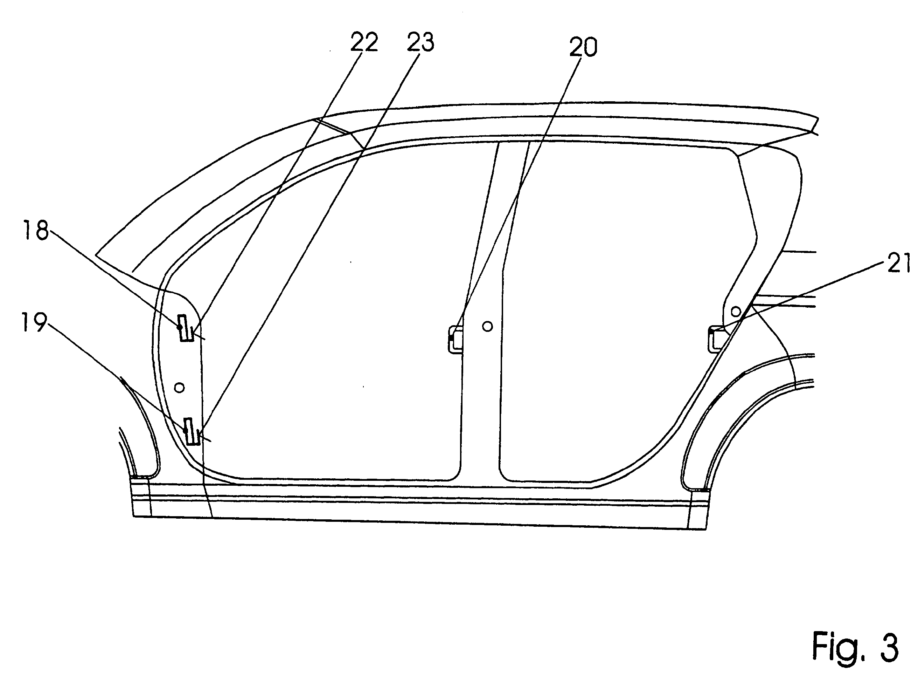

In **Fig. 3** ist das geschehen. Die fahrzeugseitigen oberen und unteren Scharnierschenkel 18,19 sind in x-Richtung und z-Richtung genau positioniert, in y-Richtung an die A-Säule 4 herangeführt und befestigt worden. Der Schließbügel 20 wurde in y-Richtung und in z-Richtung genau positioniert, in x-Richtung an die B-Säule 5 herangeführt und dort befestigt; ebenso der Schließbügel 21 für die hintere Tür.

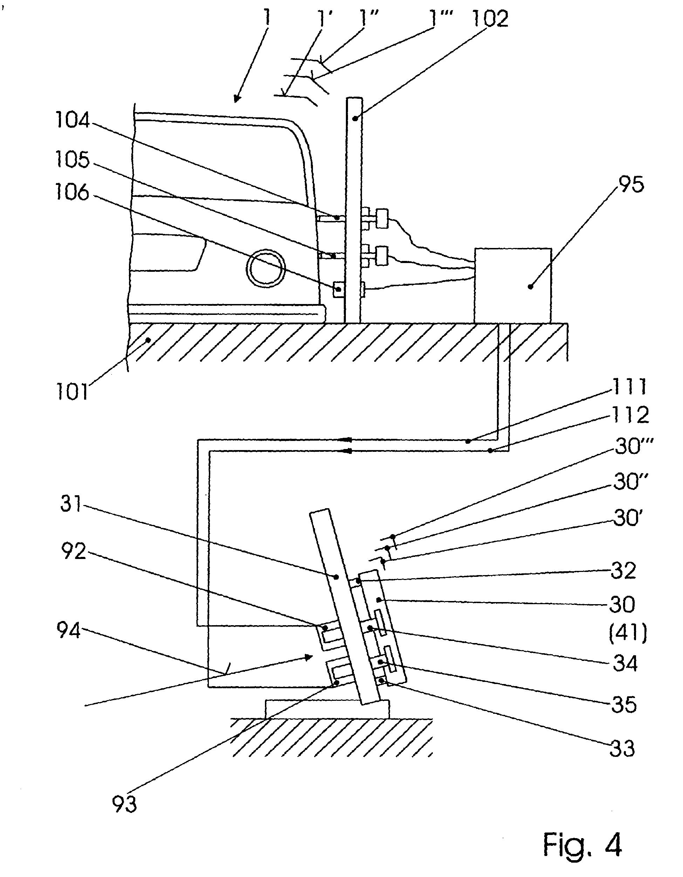

**Fig. 4** zeigt den dritten Verfahrensschritt. Im oberen Bildteil ist der Fahrzeugkörper 1 zu sehen, für den die gerade im unteren Bildteil im Zusammenbau begriffene Tür bestimmt ist. Der Fahrzeugkörper 1 ruht positionsgenau auf einer Unterlage 101, auf der ein Messgestell 102 steht. Auf diesem ist beispielsweise zumindest ein Messtaster von der bei Präzisionsmessvorrichtungen üblichen Art angebracht. Ein Messtaster genügt, wenn er in allen drei Koordinatenrichtungen beweglich ist. Hier sind drei in y-Richtung verschiebbare Messtaster 104,105,106 dargestellt, die gerade die Scharnierzapfen 22,23 der fahrzeugseitigen Scharnierschenkel 18,19 und den Schließbügel 20 abtasten, um deren genaue Position zu messen. Diese Messwerte werden beim Zusammenbau der im unteren Bildteil dargestellten vorderen Tür verwendet, um die türfesten Scharnierschenkel (im Detail nicht dargestellt) und das Schloss beziehungsweise die Schlossplatte auf der Tür genau positioniert zu befestigen.

Im unteren Bildteil ist die Vorrichtung 31 zum Zusammenbau der Tür dargestellt, die sich in der Nähe der Fertigungsstraße des Fahrzeugkörpers oder auch ganz woanders befinden kann. Der Türrohbau 30 ist an Referenzlagem 32,33 der Vorrichtung 31 festgelegt. An der Vorrichtung 31 sind Bezugslager 34,35 für die Aufnahme der positionsgenau zu befestigenden türseitigen Scharnierschenkel angebracht. Diese sind beispielsweise in der y-Richtung (Pfeil 94) verstellbar. Die Bezugslager 34,35 können im einfachsten Fall in gewissen der Toleranzdrift des Fahrzeugkörpers entsprechenden Zeitabständen entsprechend den an den Messtastern 104,105 abgelesenen Werten nachgestellt werden. Das Nachstellen kann auch mittels ferngesteuerter Antriebsvorrichtungen 92,93 erfolgen.

In der abgebildeten Anordnung werden die am Fahrzeugkörper gemessen Werte durch Koppelung der Messtaster 104,105 und der ferngesteuerten Antriebsvorrichtungen 92,93 über die Steuervorrichtung 95 direkt übertragen und so zu dem an jedem individuellen Fahrzeug gemessenen Werten eingestellt. Die Signalleitungen 111,112 sind unterbrochen dargestellt, da sie und die Steuervorrichtung 95 sehr verschieden disponiert sein und der Fahrzeugkörper 100 und die gerade montierte Tür an weit voneinander entfernten Orten entstehen können, auch zu verschiedenen Zeitpunkten, wenn nur das Fahrzeug einen zeitlichen Vorsprung hat und in der Steuervorrichtung 95 ein Gedächtnis vorgesehen ist.

Die Sequenzierung ist für das Fahrzeug durch die Linien 1', 1", 1"', die weitere nachfolgende Fahrzeuge darstellen sollen, und für die Türen 30 mit den Linien 30', 30" und 30"', die weitere nachfolgende Türen darstellen sollen, angedeutet. Das Verfahren besteht dann darin, dass vor Beginn des Zusammenbaues einer jeden Tür die Bezugslager 31,47,48 entsprechend dem individualisierten Fahrzeugkörper so eingestellt sind, dass die fertige Tür vollkommen in dieses passt.

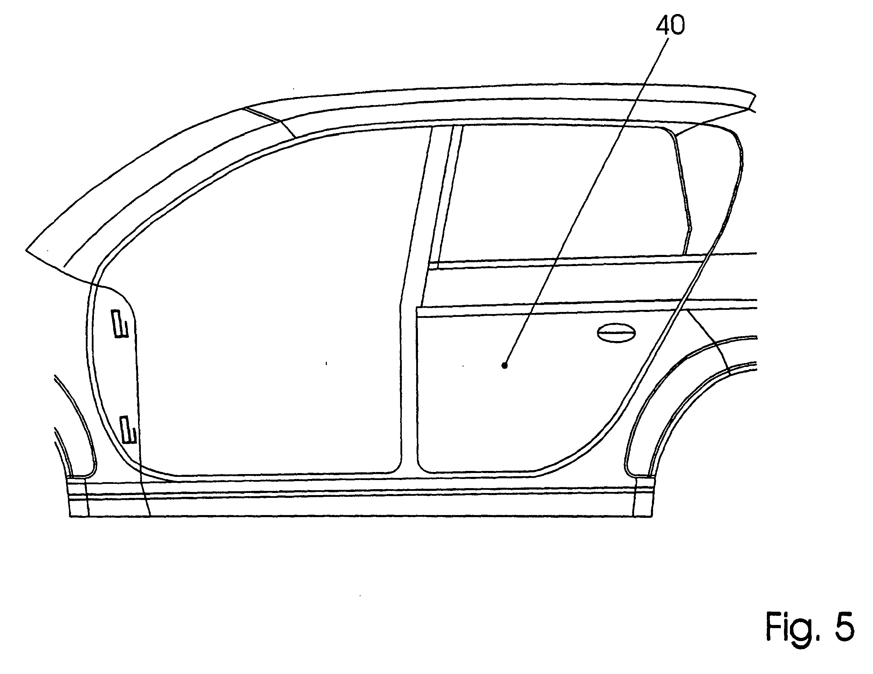

**Fig. 5** zeigt den Fahrzeugkörper 1 mit der bereits fertig montierten hinteren Tür 40. Auf den Zusammenbau dieser hinteren Tür 40 wurde nicht näher eingegangen, da er analog dem der vorderen Tür ablauft, jedoch mit dem Unterschied, dass für die hintere Tür 40 keine geteilten Scharniere erforderlich sind, weil die B-Säule 5 von allen Seiten zugänglich ist. Die hintere Tür 40 kann so mit dem kompletten Scharnier zusammen gebaut und in der üblichen Weise in den Fahrzeugkörper 1 eingebaut werden, was wegen dem bereits exakt positionierten hinteren Schließblech 21 aber keine Einstellarbeit mehr erfordert. Wesentlich ist, dass die hintere Tür 40 zuerst eingebaut wird, und dann erst die vordere Tür 41. Die hintere Tür 40 wird in x-Richtung und z-Richtung bezüglich des Referenzpunktes B positioniert.

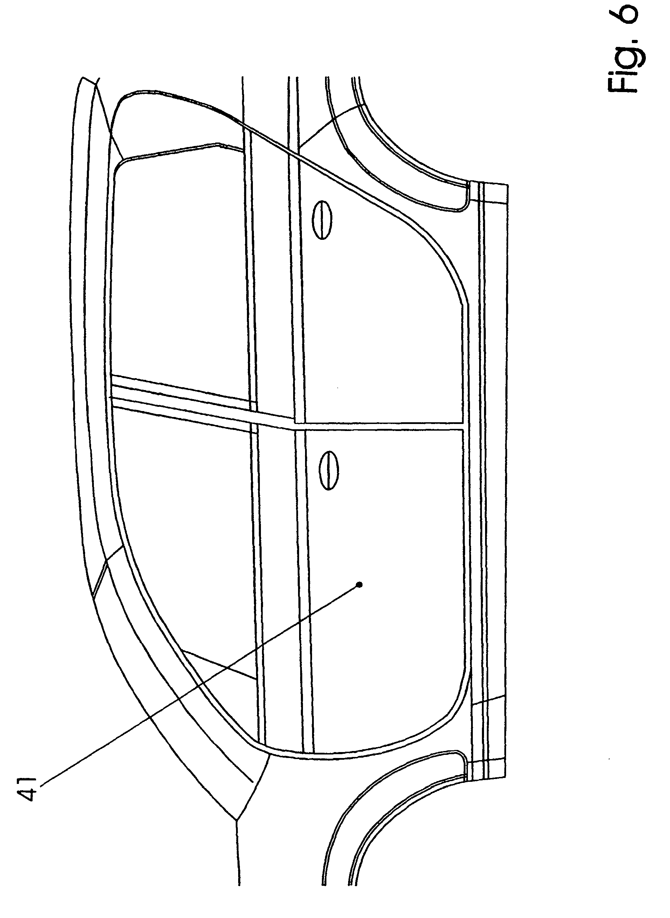

In **Fig. 6** ist auch der nächste Verfahrensschritt der Einbau der vorderen Tür vollendet, weil sich dieser besonders einfach gestaltet. Es genügt nämlich, die fertige Tür mit ihrem genau positionierten türseitigen Scharnierschenkel in die Scharnierzapfen 22,23 einzuhängen. Dank dem erfindungsgemäßen Verfahren sind keine oder höchstens geringfügige Einstellarbeiten erforderlich.

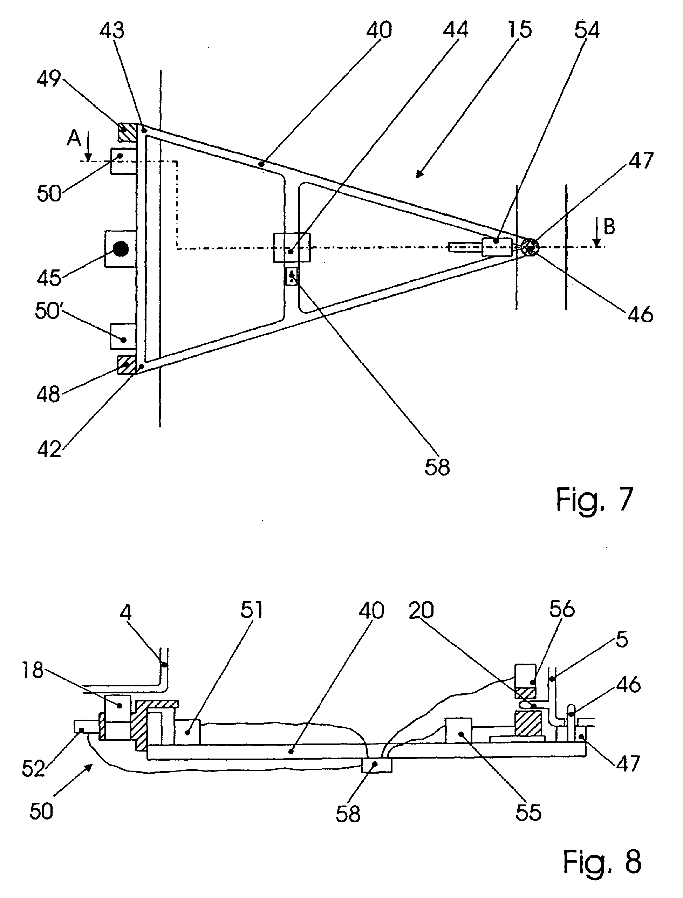

In **Fig. 7** und **Fig. 8** ist die Hilfsvorrichtung 15 dargestellt. Ihr Rahmen 40 hat drei Ecken 41,42,43 und eine Anschlussplatte 44, an der sie entweder von Hand oder mittels einer programmgesteuerten Vorrichtung, etwa einem Roboter, herangeführt und angelegt werden kann. Auf dem Rahmen 40 sind zwei Referenzdorne 45,46 angebracht, der Referenzdorn 45 greift in den Referenzpunkt A und ist so in x-Richtung und z-Richtung positioniert, der Referenzdorn 46 greift in das Loch des Referenzpunktes B und ist dort in z-Richtung geführt. Weiters sind an den drei Ecken 41,42,43 des Rahmens 40 Polster 47,48,49 angebracht, welche beim Anlegen der Hilfsvorrichtung an die Berührungspunkte 10,11,12 Fig. 1 angelegt werden.

Zum Positionieren, Anbringen und Befestigen der schließrelevanten Teile sind Halterungen 50,50' für die fahrzeugseitigen Scharnierschenkel 18,19 und eine Halterung 54 für den Schließbügel 20 vorgesehen. Diese Halterungen sind im einfachsten Fall manuell bediente Spanner, können aber auch fremdkraftbetätigt und weiters fernbetätigt sein. Die Halterung 50 ist an dem Rahmen 40 mittels eines Zylinders oder Solenoides 51 in y-Richtung verschiebbar und besitzt einen Klemmzylinder 52 zum Festhalten des fahrzeugseitigen Scharnierschenkels 18. Die Halterung 50 besorgt die genaue Positionierung des Schenkels 18 in x-Richtung und z-Richtung, mittels der Verschiebung in y-Richtung wird der Schenkel bis zur Berührung an die A-Säule 4 herangeführt. Die Halterung 54 für den Schließbügels 20 ist mittels eines Solenoides oder Zylinders in x-Richtung verschiebbar und besitzt eine Klemmeinrichtung 56 für den Schließbügel 20. Die Halterung 54 besorgt die genaue Positionierung des Schließbügels in y-Richtung und z-Richtung, das Solenoid oder der Zylinder 55 verschiebt den Schließbügel 20 in x-Richtung, bis er an der B-Säule 5 anliegt. In diesen Positionen können Scharnierschenkel 18,19 und Schließbügel 20 fest mit dem Fahrzeugkörper 1 verbunden werden.

## Patentansprüche

1. Verfahren zur Montage einer Tür an einem Kraftfahrzeug in den folgenden Schritten:
a) Befestigen der fahrzeugseitigen Scharnierschenkel (18,19 und des Schließbügels (20) am Fahrzeugkörper (1) mittels einer an den Fahrzeugkörper angelegten Hilfsvorrichtung (15),
b) Zusammenbau der Tür (30) abseits der Fertigung des Fahrzeugkörpers, wobei mittels einer Vorrichtung (31) mit Bezugslagern (34,35) die türseitigen Scharnierschenkel und das Schlossblech beziehungsweise Schloss entsprechend am Fahrzeugkörper (1) genommener Maße positioniert werden,
c) Montage der zusammengebauten Tür (41) im Fahrzeugkörper (1) durch Fügen der Scharnierachsen (22,23)

2. Verfahren nach Anspruch 1, **dadurch gekennzeichnet, dass** die Hilfsvorrichtung (15) an einem ersten Referenzpunkt (A) des Fahrzeugkörpers in einer ersten und zweiten Koordinatenrichtung, an einem zweiten Referenzpunkt (B) des Fahrzeugkörpers in der ersten oder zweiten Koordinatenrichtung festgelegt, und an drei Berührungspunkten (10,11,12) des Fahrzeugkörpers (1) in der dritten Koordinatenrichtung angelegt wird.

3. Verfahren nach Anspruch 2, **dadurch gekennzeichnet, dass** die erste Koordinatenrichtung die x-Richtung, die zweite Koordinatenrichtung die z-Richtung und die dritte Koordinatenrichtung die y-Richtung ist.

4. Verfahren nach Anspruch 3, **dadurch gekennzeichnet, dass** der Referenzpunkt (A) ein in die A-Säule () und der Referenzpunkt (B) ein in die B-Säule () des Fahrzeugkörpers eingestanztes Loch ist.

5. Verfahren nach Anspruch 1, **dadurch gekennzeichnet, dass** die Bezugslager (34,35) verstellbar sind, wobei die Bezugslager (34,35) für die türseitigen Scharnierschenkel entsprechend der am Fahrzeugkörper gemessenen Lage der Scharnierachsen (22,23) der bereits befestigten fahrzeugseitigen Scharnierschenkel (18,19) und das Bezugslager für das Schlossblech beziehungsweise Schloss entsprechend der am Fahrzeugkörper (1) gemessenen Lage des bereits befestigten Schließbügels (20; 21) eingestellt werden.

6. Verfahren nach Anspruch 5, **dadurch gekennzeichnet, dass** die Lage der Scharnierachsen (22,23) der fahrzeugseitigen Scharnierschenkel (18,19) und des Schließbügels (20) jeweils an dem Fahrzeugkörper (1) gemessen werden, für das die jeweilige Tür bestimmt ist und die Bezugslager (34,35) entsprechend verstellt werden.

7. Verfahren nach Anspruch 6, **dadurch gekennzeichnet, dass** Lage der Scharnierachsen (22,23) der fahrzeugseitigen Scharnierschenkel (18,19) und des Schließbügels (20) jeweils in y-Richtung gemessen werden.

8. Verfahren nach Anspruch 1, für viertürige Kraftfahrzeuge, mit folgenden weiteren Schritten:
a) Befestigen des Schließbügels (21) für die hintere Tür (40) am Fahrzeugkörper (1) mittels einer weiteren Hilfsvorrichtung (16), die an dem zweiten Referenzpunkt (B) des Fahrzeugkörpers in der x-Richtung und in der z-Richtung und an einem dritten Referenzpunkt (C) des Fahrzeugkörpers in der z-Richtung festgelegt, und an drei Berührungspunkten (12,13,14) des Fahrzeugkörpers (1) angelegt wird.
b) Zusammenbau der hinteren Tür (40) abseits der Fertigung des Fahrzeugkörpers (1), wobei mittels einer Vorrichtung (31) mit Bezugslagern (34,35) die hinteren Scharniere und das Schlossblech beziehungsweise Schloss entsprechend am Fahrzeugkörper genommener Maße positioniert werden,
c) Montage der zusammengebauten hinteren Tür (40) mit komplettem Scharnier im Fahrzeugkörper, bevor die vordere Tür im Fahrzeugkörper montiert wird.

9. Verfahren nach Anspruch 8, **dadurch gekennzeichnet, dass** die am Fahrzeugkörper (1) genommenen Maße die Position der Scharnier-Auflageflächen und die Position des Schließbügels sind.

## Claims

1. A method of mounting a door to a motor vehicle in the following steps:
a) fixing the vehicle-side hinge arms (18, 19) and the lock stirrup (20) to the vehicle body (1) by means of an assistance device (15) applied to the vehicle body,
b) assembling the door (30) away from production of the vehicle body, wherein by means of a device (31) with reference bearings (34, 35) the door-side hinge arms and the lock plate or lock are positioned in accordance with measurements taken on the vehicle body (1), and
c) mounting the assembled door (41) in the vehicle body (1) by fitting the hinge pins (22, 23).

2. A method according to claim 1 **characterised in that** the assistance device (15) is secured at a first reference point (A) of the vehicle body in a first and second co-ordinate direction and at a second reference point (B) of the vehicle body in the first or second co-ordinate direction, and applied against three contact points (10, 11, 12) of the vehicle body (1) in the third co-ordinate direction.

3. A method according to claim 2 **characterised in that** the first co-ordinate direction is the x-direction, the second co-ordinate direction is the z-direction and the third co-ordinate direction is the y-direction.

4. A method according to claim 3 **characterised in that** the reference point (A) is a hole stamped into the A-pillar of the vehicle body and the reference point (B) is a hole stamped into the B-pillar of the vehicle body.

5. A method according to claim 1 **characterised in that** the reference bearings (34, 35) are adjustable, wherein the reference bearings (34, 35) for the door-side hinge arms are adjusted in accordance with the position, measured on the vehicle body, of the hinge pins (22, 23) of the vehicle-side hinge arms (18, 19) which are already fixed and the reference bearing for the lock plate or lock is adjusted in accordance with the position, measured on the vehicle body (1), of the lock stirrup (20; 21) which is already fixed.

6. A method according to claim 5 **characterised in that** the position of the hinge pins (22, 23) of the vehicle-side hinge arms (18, 19) and the lock stirrup (20) are respectively measured on the vehicle body (1) for which the respective door is intended and the reference bearings (34, 35) are correspondingly adjusted.

7. A method according to claim 6 **characterised in that** the position of the hinge pins (22, 23) of the vehicle-side hinge arms (18, 19) and the lock stirrup (20) are respectively measured in the y-direction.

8. A method according to claim 1 for four-door motor vehicles comprising the following further steps:
a) fixing the lock stirrup (21) for the rear door (40) to the vehicle body (1) by means of a further assistance device (16) which is secured at the second reference point (B) of the vehicle body in the x-direction and in the z-direction and at a third reference point (C) of the vehicle body in the z-direction and is applied against three contact points (12, 13, 14) of the vehicle body (1),
b) assembling the rear door (40) away from production of the vehicle body (1), wherein by means of a device (31) with reference bearings (34, 35) the rear hinges and the lock plate or lock are positioned in accordance with measurements taken on the vehicle body, and
c) mounting the assembled rear door (40) with complete hinge in the vehicle body before the front door is mounted in the vehicle body.

9. A method according to claim 8 **characterised in that** the measurements taken on the vehicle body (1) are the position of the hinge contact surfaces and the position of the lock stirrup.

## Revendications

1. Procédé de montage d'une porte sur un véhicule automobile, comprenant les étapes suivantes :
a) fixation des éléments de charnière côté véhicule (18,19) et de l'étrier de fermeture (20) sur le corps de véhicule (1) au moyen d'un dispositif auxiliaire (15) posé sur le véhicule ;
b) assemblage de la porte (30)) à l'écart de la fabrication du corps de véhicule (1), moyennant quoi les éléments de charnière côté porte et la plaque de serrure et/ou la serrure sont positionnés au moyen d'un dispositif (31) comportant des appuis de référence (34,35) en fonction de cotes prises sur le corps de véhicule (1) ; et
c) montage de la porte assemblée (41) sur le corps de véhicule par assemblage des axes de charnière (22,23).

2. Procédé selon la revendication 1, **caractérisé en ce que** le dispositif auxiliaire (15) est fixé en un premier point de référence (A) du corps de véhicule dans une première et une deuxième directions de coordonnées, en un deuxième point de référence (B) du corps de véhicule dans la première ou la deuxième direction de coordonnées, et est posé en trois points de contact (10,11,12) du corps de véhicule (1) dans la troisième direction de coordonnées.

3. Procédé selon la revendication 2, **caractérisé en ce que** la première direction de coordonnées est la direction x, la deuxième direction de coordonnées est la direction y, et la troisième direction de coordonnées est la direction z.

4. Procédé selon la revendication 3 **caractérisé en ce que** le point de référence A est une perforation découpée dans le pied avant (4) et le point de référence (B) une perforation découpée dans le pied milieu (5).

5. Procédé selon la revendication 1, **caractérisé en ce que** les appuis de référence (34,35) sont réglables, moyennant quoi lesdits appuis de référence (34,35) destinés aux éléments de charnière côté porte sont réglés en fonction de la position des axes de charnière (22, 23) des éléments de charnière déjà fixés côté véhicule, mesurée sur le corps de véhicule, et l'appui de référence destiné à la plaque de serrure et/ou à la serrure est réglé en fonction de la position de l'étrier de fermeture (20,21) déjà fixé, mesurée sur le corps de véhicule (1).

6. Procédé selon la revendication 5, **caractérisé en ce que** la position des axes de charnière (22,23) des éléments de charnière côté véhicule (18,19) et de l'étrier de fermeture (20) est toujours mesurée sur le corps de véhicule (1) auquel la porte est destinée, et les appuis de référence (34,35) sont réglés en conséquence.

7. Procédé selon la revendication 6, **caractérisé en ce que** la position des axes de charnière (22,23) des éléments de charnière côté véhicule (18,19) et de l'étrier de fermeture (20) est toujours mesurée dans la direction y.

8. Procédé selon la revendication 1, pour des véhicules à quatre portes, comprenant les étapes supplémentaires suivantes :
a) fixation de l'étrier de fermeture (21) destiné à la porte arrière (40) sur le cops de véhicule (1) au moyen d'un autre dispositif auxiliaire (16) qui est fixé au deuxième point de référence (B) du corps de véhicule dans la direction x et dans la direction z, et au troisième point de référence (C) du corps de véhicule dans la direction z, et est posé aux trois points de contact (12,13,14) du corps de véhicule (1) ;
b) assemblage de la porte arrière (40) à l'écart de la fabrication du corps de véhicule (1), moyennant quoi les charnières arrière et la plaque de serrure et/ou la serrure sont positionnées au moyen d'un dispositif (31) comportant des appuis de référence (34,35) en fonction de cotes prises sur le corps de véhicule (1) ; et
c) montage de la porte arrière assemblée (40) avec la charnière complète sur le corps de véhicule avant que la porte avant soit montée sur le corps de véhicule.

9. Procédé selon la revendication 8, **caractérisé en ce que** les cotes prises sur le corps de véhicule (1) sont la position de la surface d'appui de la charnière et la position de l'étrier de fermeture.
